(19) Europäisches Patentamt

European Patent Office

Office européen des brevets

(11) **EP 4 756 484 A1**

(12) **EUROPEAN PATENT APPLICATION**

(43) Date of publication:
**10.06.2026 Bulletin 2026/24**

(21) Application number: **25202357.7**

(22) Date of filing: **16.09.2025**

(51) International Patent Classification (IPC):
**G01S 7/40** (2006.01)    **G01S 7/48** (2006.01)
**G01S 13/86** (2006.01)   **G01S 13/88** (2006.01)
**G01S 17/42** (2006.01)

(52) Cooperative Patent Classification (CPC):
**G01S 13/865; G01S 7/40; G01S 7/4808;
G01S 13/885; G01S 17/42**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.12.2024  IN 202421096556**

(71) Applicant: **Tata Consultancy Services Limited
Maharashtra (IN)**

(72) Inventors:
• **SWAIN, Amit
  700160 Kolkata, West Bengal (IN)**

• **GUPTA, Pathikrit
  700160 Kolkata, West Bengal (IN)**
• **KHASNOBISH, Anwesha
  700160 Kolkata, West Bengal (IN)**
• **BHAUMIK, Chirabrata
  700160 Kolkata, West Bengal (IN)**
• **CHAKRAVARTY, Tapas
  700160 Kolkata, West Bengal (IN)**
• **AKHTAR, Mohammad Jaleel
  208016 Kanpur, Uttar Pradesh (IN)**

(74) Representative: **Goddar, Heinz J.
Boehmert & Boehmert
Anwaltspartnerschaft mbB
Pettenkoferstrasse 22
80336 München (DE)**

(54) **SYSTEM AND METHOD FOR ENHANCED RADIO-FREQUENCY SUBSURFACE IMAGING UNDER COMPLEX TERRAIN USING RADAR AND LIDAR**

(57)    Existing works perform subsurface imaging without paying attention to the presence of surface undulation, which can cause irregular travel paths for waves emitted by a Radar and may produce defocusing effects in the reconstructed image. The present disclosure estimates noise level of a LiDAR (216) in a stationary mode by considering the standard deviation of a LiDAR sensor data. Successive LiDAR values at every position are tracked for a pre-defined time intervals and if it satisfies a LiDAR stabilization criterion, the LiDAR is considered stable and the LiDAR value obtained is logged as a LiDAR elevation data. A two-layer velocity model is estimated from the LiDAR elevation data and a phase shift operator of a Phase shift migration (PSM) is modified by incorporating the two-layer velocity model. Surface normal information is extracted from the LiDAR elevation data and an amplitude correction factor is formulated using the extracted surface normal information.

FIG. 2

EP 4 756 484 A1

**Description**

CROSS-REFERENCE TO RELATED APPLICATIONS AND PRIORITY

The present application claims priority to Indian application no. 202421096556 filed on December 6, 2024.

TECHNICAL FIELD

The disclosure herein generally relates to Radio-Frequency (RF) subsurface imaging, and, more particularly, to a system and method for enhanced Radio-Frequency subsurface imaging under complex terrain using Radar and LiDAR.

BACKGROUND

Ground Penetrating Radar (GPR) is an indispensable tool for non-invasive inspection and imaging of visually occluded structures beneath the surface. In some of the applications of the Ground Penetrating Radar (GPR), for instance, in case of rock mass inspection in underground mines, the surface under test is uneven (non-planar) and prone to loose rock hazards. For such cases, it is often beneficial to use an elevated or non-contact Radar (Radio Detection And Ranging). However, for a non-contact Radar (Radio Detection And Ranging), presence of surface undulations can cause irregular travel paths for the incident waves and may produce defocusing effects at the surface, which become more pronounced when the surface undulations are of the same order as the depth of investigation. These effects can severely distort the reflection amplitudes of the subsurface target and may produce erroneous dimensional as well as localization information in the reconstructed images.
In most of the existing practices, the variations in surface topography are circumvented by breaking the Radar (Radio Detection And Ranging) B-Scan line into shorter paths or assuming the terrain in that path to be flat. In one of the existing works, a method has been proposed to substitute the air-layer between the antenna and surface with that of the subsurface media by shifting the individual traces and adjusting the propagation round-trip time. Several other existing works have proposed methods of static correction that basically use geodetic measurements, real-time kinematic positioning (RTK), global positioning system (GPS) or even barometers to record surface elevation data. Each time trace of a Radar (Radio Detection And Ranging) is associated with an elevation point. A reference point is chosen, which is either the highest or the starting point of elevation. Then, each trace is time adjusted with respect to the reference as described in the existing works. In another existing work, an alternative to static correction method has been suggested by employing a topographic correction algorithm for Kirchhoff migration (KM) (known in the art).

SUMMARY

Embodiments of the present disclosure present technological improvements as solutions to one or more of the above-mentioned technical problems recognized by the inventors in conventional systems. For example, in one embodiment, a method for enhanced Radio-Frequency subsurface imaging under complex terrain using Radar and LiDAR is provided. The method includes receiving, via one or more hardware processors, one or more scanning parameters specific to a subsurface using a Radio Detecting and Ranging (RADAR) and a Light Detection and Ranging (LiDAR); performing iteratively, via the one or more hardware processors, until one or more scan points comprised in the one or more scanning parameters are scanned: sending a grid of target coordinates to a motor control unit, wherein the grid of target coordinates is created using the received one or more scanning parameters; transforming the grid of target coordinates into a G-code and pushing the G-code to a scanner, wherein the scanner traverses to a target coordinate $T_G$ after receiving the G-code from at least one of a current coordinate or a starting coordinate to the target coordinate $T_G$; triggering a LiDAR stability criterion for accessing a stable LiDAR elevation value when the scanner reaches the target coordinate $T_G$; and simultaneously logging a stable LiDAR elevation data $E(x)$ and a Vector network analyzer (VNA) data $B(x, t)$, once the LiDAR reaches a stable value and sending the logged stable LiDAR elevation data $E(x)$ and the Vector network analyzer (VNA) data $B(x, t)$ to a data acquisition and computing unit; denoising, via the one or more hardware processors, the stable LiDAR elevation data $E(x)$ for each of the one or more scan points from the LiDAR by a moving average filter to obtain a denoised LiDAR elevation data $E'(x)$; transforming, via the one or more hardware processors, the denoised LiDAR elevation data $E'(x)$ to a surface map $H(x)$ by using a polynomial curve fitting; oversampling, via the one or more hardware processors, the surface map $H(x)$ by a predefined number of times to obtain a higher resolution surface $H'(x)$; creating, via the one or more hardware processors, from the oversampled smooth surface $H(x)$, a velocity model $G(x)$ based on a presence of at least one of air or a subsurface media in a B-scan plane; creating, via the one or more hardware processors, a surface normal vector $\Phi(x)$ at each of the one or more scan points from the oversampled surface $H'(x)$; performing, via the one or more hardware processors, a spatial window estimation on the velocity model vector $G(x)$ such that the velocity model vector $G(x)$ is split into a first subsurface media vector $G1'(x)$ and a second subsurface media

vector $G2'(x)$ based on a depth of respective subsurface media; generating, via the one or more hardware processors, an amplitude compensation factor $\Phi'(x)$ for each of the one or more scan points using the created surface normal vector $\Phi(x)$ for mitigating the effects of a non-normal ray incidence on an undulating terrain comprised in the subsurface; multiplying, via the one or more hardware processors, the amplitude compensation factor $\Phi'(x)$ with the VNA data $B(x, t)$ to obtain a space-time domain Radar signal $I(x, t)$; performing, via the one or more hardware processors, a Fast Fourier Transform (FFT) on the space-time domain Radar signal $I(x, t)$ to obtain a space-frequency domain vector $I'(x, \omega, z = 0)$; performing iteratively, via the one or more hardware processors, for one or more iterative values of incremental depth in $z$-axis for each of the one or more scan points for estimating a phase shift per depth element to form a 2D image of the subsurface media till the total depth of the subsurface investigation is covered: obtaining two phase-shifted vectors $F1(x, \omega, z = 0)$ and $F2(x, \omega, z = 0)$ based on the subsurface media by multiplying two instances of vector $I'(x, \omega, z = 0)$ by $G1'(x)$ and $G2'(x)$; performing a Fast Fourier Transform (FFT) on the two phase shifted vectors $F1(x, \omega, z = 0)$ and $F2(x, \omega, z = 0)$ along a $x$ axis to obtain a difference between wavenumber and one or more frequency domain vectors $F1'(K_x, \omega, z = 0)$ and $F2'(K_x, \omega, z = 0)$ respectively; obtaining one or more phase corrected vectors $J1(K_x, \omega, z + \Delta z)$ and $J2(K_x, \omega, z + \Delta z)$ by phase correcting the difference between the wavenumber and the frequency domain vectors $F1'(K_x, \omega, z = 0)$ and $F2'(K_x, \omega, z = 0)$ by a factor of $e^{k1|z|}$ and $e^{k2|z|}$ respectively; obtaining a summation of the one or more phase corrected vectors $J(K_x, z)$ by adding the one or more phase corrected vectors $J1(K_x, \omega, z)$ and $J2(K_x, \omega, z)$ along with a $\omega$ dimension; and performing an Inverse Fast Fourier Transform (IFFT) on the obtained summation of the one or more phase corrected vectors $J(K_x, z)$ is on the $x$-axis to obtain a phase corrected spatial domain vector $O(x, z)$; and performing, via the one or more hardware processors, a 2D interpolation of the phase corrected spatial domain vector $O(x, z)$ to obtain $O'(x, z)$, wherein $O'(x, z)$ serves as a final B-scan image for the scan area of the subsurface and a test bed.

In another aspect, there is provided a system for enhanced Radio-Frequency subsurface imaging under complex terrain using Radar and LiDAR. The system comprises: a memory storing instructions; one or more communication interfaces; and one or more hardware processors coupled to the memory via the one or more communication interfaces, wherein the one or more hardware processors are configured by the instructions to: receive one or more scanning parameters specific to a subsurface using a Radio Detecting and Ranging (RADAR) and a Light Detection and Ranging (LiDAR). The system further includes performing iteratively, until one or more scan points comprised in the one or more scanning parameters are scanned: sending a grid of target coordinates to a motor control unit, wherein the grid of target coordinates is created using the received one or more scanning parameters; transforming the grid of target coordinates into a G-code and pushing the G-code to a scanner, wherein the scanner traverses to a target coordinate $T_G$ after receiving the G-code from at least one of a current coordinate or a starting coordinate to the target coordinate $T_G$; triggering a LiDAR stability criterion for accessing a stable LiDAR elevation value when the scanner reaches the target coordinate $T_G$; and simultaneously logging a stable LiDAR elevation data $E(x)$ and a Vector network analyzer (VNA) data $B(x, t)$, once the LiDAR reaches a stable value and sending the logged stable LiDAR elevation data $E(x)$ and the Vector network analyzer (VNA) data $B(x, t)$ to a data acquisition and computing unit; denoising, the stable LiDAR elevation data $E(x)$ for each of the one or more scan points from the LiDAR by a moving average filter to obtain a denoised LiDAR elevation data $E'(x)$; transforming, the denoised LiDAR elevation data $E'(x)$ to a surface map $H(x)$ by using a polynomial curve fitting; oversampling, the surface map $H(x)$ by a predefined number of times to obtain a higher resolution surface $H'(x)$; creating, from the oversampled smooth surface $H(x)$, a velocity model $G(x)$ based on a presence of at least one of air or a subsurface media in a B-scan plane; creating, a surface normal vector $\Phi(x)$ at each of the one or more scan points from the oversampled surface $H'(x)$; performing, a spatial window estimation on the velocity model vector $G(x)$ such that the velocity model vector $G(x)$ is split into a first subsurface media vector $G1'(x)$ and a second subsurface media vector $G2'(x)$ based on a depth of respective subsurface media; generating, an amplitude compensation factor $\Phi'(x)$ for each of the one or more scan points using the created surface normal vector $\Phi(x)$ for mitigating the effects of a non-normal ray incidence on an undulating terrain comprised in the subsurface; multiplying, the amplitude compensation factor $\Phi'(x)$ with the VNA data $B(x, t)$ to obtain a space-time domain Radar signal $I(x, t)$; performing, a Fast Fourier Transform (FFT) on the space-time domain Radar signal $I(x, t)$ to obtain a space-frequency domain vector $I'(x, \omega, z = 0)$; performing iteratively, for one or more iterative values of incremental depth in $z$-axis for each of the one or more scan points for estimating a phase shift per depth element to form a 2D image of the subsurface media till the total depth of the subsurface investigation is covered: obtaining two phase-shifted vectors $F1(x, \omega, z = 0)$ and $F2(x, \omega, z = 0)$ based on the subsurface media by multiplying two instances of vector $I'(x, \omega, z = 0)$ by $G1'(x)$ and $G2'(x)$; performing a Fast Fourier Transform (FFT) on the two phase shifted vectors $F1(x, \omega, z = 0)$ and $F2(x, \omega, z = 0)$ along a $x$ axis to obtain a difference between wavenumber and one or more frequency domain vectors $F1'(K_x, \omega, z = 0)$ and $F2'(K_x, \omega, z = 0)$ respectively; obtaining one or more phase corrected vectors $J1(K_x, \omega, z + \Delta z)$ and $J2(K_x, \omega, z + \Delta z)$ by phase correcting the difference between the wavenumber and the frequency domain vectors $F1'(K_x, \omega, z = 0)$ and $F2'(K_x, \omega, z = 0)$ by a factor of $e^{k1|z|}$ and $e^{k2|z|}$ respectively; obtaining a summation of the one or more phase corrected vectors $J(K_x, z)$ by adding the one or more phase corrected vectors $J1(K_x, \omega, z)$ and $J2(K_x, \omega, z)$ along with a $\omega$ dimension; and performing an Inverse Fast Fourier Transform (IFFT) on the obtained summation of the one or more phase corrected vectors $J(K_x, z)$ is on the $x$-axis to obtain a phase corrected spatial domain vector $O(x, z)$; and performing, a 2D interpolation of the phase corrected spatial domain vector $O(x, z)$ to obtain $O'(x, z)$, wherein $O'(x, z)$ serves as a final B-scan image for the scan area of the subsurface and a test bed.

In yet another aspect, there are provided one or more non-transitory machine-readable information storage mediums comprising one or more instructions which when executed by one or more hardware processors cause receiving, one or more scanning parameters specific to a subsurface using a Radio Detecting and Ranging (RADAR) and a Light Detection and Ranging (LiDAR); performing iteratively, until one or more scan points comprised in the one or more scanning parameters are scanned: sending a grid of target coordinates to a motor control unit, wherein the grid of target coordinates is created using the received one or more scanning parameters; transforming the grid of target coordinates into a G-code and pushing the G-code to a scanner, wherein the scanner traverses to a target coordinate $T_G$ after receiving the G-code from at least one of a current coordinate or a starting coordinate to the target coordinate $T_G$; triggering a LiDAR stability criterion for accessing a stable LiDAR elevation value when the scanner reaches the target coordinate $T_G$; and simultaneously logging a stable LiDAR elevation data $E(x)$ and a Vector network analyzer (VNA) data $B(x, t)$, once the LiDAR reaches a stable value and sending the logged stable LiDAR elevation data $E(x)$ and the Vector network analyzer (VNA) data $B(x, t)$ to a data acquisition and computing unit; denoising, the stable LiDAR elevation data $E(x)$ for each of the one or more scan points from the LiDAR by a moving average filter to obtain a denoised LiDAR elevation data $E'(x)$; transforming, the denoised LiDAR elevation data $E'(x)$ to a surface map $H(x)$ by using a polynomial curve fitting; oversampling, via the one or more hardware processors, the surface map $H(x)$ by a predefined number of times to obtain a higher resolution surface $H'(x)$; creating, via the one or more hardware processors, from the oversampled smooth surface $H(x)$, a velocity model $G(x)$ based on a presence of at least one of air or a subsurface media in a B-scan plane; creating, a surface normal vector $\Phi(x)$ at each of the one or more scan points from the oversampled surface $H'(x)$; performing, a spatial window estimation on the velocity model vector $G(x)$ such that the velocity model vector $G(x)$ is split into a first subsurface media vector $G1'(x)$ and a second subsurface media vector $G2'(x)$ based on a depth of respective subsurface media; generating, an amplitude compensation factor $\Phi'(x)$ for each of the one or more scan points using the created surface normal vector $\Phi(x)$ for mitigating the effects of a non-normal ray incidence on an undulating terrain comprised in the subsurface; multiplying, the amplitude compensation factor $\Phi'(x)$ with the VNA data $B(x, t)$ to obtain a space-time domain Radar signal $I(x, t)$; performing, a Fast Fourier Transform (FFT) on the space-time domain Radar signal $I(x, t)$ to obtain a space-frequency domain vector $I'(x, \omega, z = 0)$; performing iteratively, for one or more iterative values of incremental depth in $z$-axis for each of the one or more scan points for estimating a phase shift per depth element to form a 2D image of the subsurface media till the total depth of the subsurface investigation is covered: obtaining two phase-shifted vectors $F1(x, \omega, z = 0)$ and $F2(x, \omega, z = 0)$ based on the subsurface media by multiplying two instances of vector $I'(x, \omega, z = 0)$ by $G1'(x)$ and $G2'(x)$; performing a Fast Fourier Transform (FFT) on the two phase shifted vectors $F1(x, \omega, z = 0)$ and $F2(x, \omega, z = 0)$ along a $x$ axis to obtain a difference between wavenumber and one or more frequency domain vectors $F1'(K_x, \omega, z = 0)$ and $F2'(K_x, \omega, z = 0)$ respectively; obtaining one or more phase corrected vectors $J1(K_x, \omega, z + \Delta z)$ and $J2(K_x, \omega, z + \Delta z)$ by phase correcting the difference between the wavenumber and the frequency domain vectors $F1'(K_x, \omega, z = 0)$ and $F2'(K_x, \omega, z = 0)$ by a factor of $e^{k1|z|}$ and $e^{k2|z|}$ respectively; obtaining a summation of the one or more phase corrected vectors $J(K_x, z)$ by adding the one or more phase corrected vectors $J1(K_x, \omega, z)$ and $J2(K_x, \omega, z)$ along with a $\omega$ dimension; and performing an Inverse Fast Fourier Transform (IFFT) on the obtained summation of the one or more phase corrected vectors $J(K_x, z)$ is on the x-axis to obtain a phase corrected spatial domain vector $O(x, z)$; and performing, a 2D interpolation of the phase corrected spatial domain vector $O(x,z)$ to obtain $O'(x, z)$, wherein $O'(x, z)$ serves as a final B-scan image for the scan area of the subsurface and a test bed.

It is to be understood that both the foregoing general description and the following detailed description are exemplary and explanatory only and are not restrictive of the invention, as claimed.


BRIEF DESCRIPTION OF THE DRAWINGS

The accompanying drawings, which are incorporated in and constitute a part of this disclosure, illustrate exemplary embodiments and, together with the description, serve to explain the disclosed principles:

The accompanying drawings, which are incorporated in and constitute a part of this disclosure, illustrate exemplary embodiments and, together with the description, serve to explain the disclosed principles:

FIG. 1 illustrates an exemplary system for enhanced Radio-Frequency subsurface imaging under complex terrain using Radar and LiDAR, according to some embodiments of the present disclosure.

FIG. 2 is a functional block diagram of the system for enhanced Radio-Frequency subsurface imaging under complex terrain using Radar and LiDAR, according to some embodiments of the present disclosure.

FIGS. 3A through 3D are flow diagrams illustrating the steps involved in the method for enhanced Radio-Frequency subsurface imaging under complex terrain using Radar and LiDAR, according to some embodiments of the present disclosure.

FIGS. 4A and 4B shows a schematic diagram of the experimental setup for (a) planar and (b) non-planar surface test-case, in conjunction with the method for enhanced Radio-Frequency subsurface imaging under complex terrain using Radar and LiDAR., according to some embodiments of the present disclosure.

FIGS. 5A through 5D illustrate the block diagram for a modified Phase Shift Migration (PSM) algorithm in conjunction with the method for enhanced Radio-Frequency subsurface imaging under complex terrain using Radar and LiDAR, according to some embodiments of the present disclosure.

FIGS. 6A and 6B illustrate Radar data collected for (a) planar and (b) non-planar surface, according to some embodiments of the present disclosure.

FIGS. 7A and 7B illustrate reconstructed subsurface images using a conventional Phase Shift Migration (PSM) algorithm for (a) planar and (b) non-planar surface, according to some embodiments of the present disclosure.

FIGS. 8A and 8B illustrate estimated velocity model for (a) planar, (b) non-planar surface, according to some embodiments of the present disclosure.

FIGS. 9A and 9B illustrate estimated surface normals for planar and non-planar surface, according to some embodiments of the present disclosure.

FIGS. 10A and 10B illustrate reconstructed subsurface images using the modified Phase Shift Migration (PSM) algorithm for (a) planar and (b) non-planar surface, according to some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The presence of non-planar or undulating terrain can produce defocusing effects in reconstructed Radar images. It can severely distort the reflection amplitudes of subsurface targets, and may produce erroneous dimension, orientation as and localization information in the reconstructed Radar images.

The present disclosure addresses the issues by providing a system and method for enhanced Radio-Frequency (RF) subsurface imaging under complex terrain using Radar (Radio Detection And Ranging) and LiDAR (Light Detection and Ranging). The present disclosure receives one or more scanning parameters specific to a subsurface using a Radio Detecting and Ranging (RADAR) and a Light Detection and Ranging (LiDAR). Further, the present disclosure performs the following steps iteratively until one or more scan points comprised in the one or more scanning parameters are scanned. A grid of target coordinates created using the received one or more scanning parameters is sent to a motor control unit. The grid of target coordinates is transformed into a G-code and pushed the G-code to a scanner. The scanner traverses to a target coordinate $T_G$ after receiving the G-code from at least one of a current coordinate or a starting coordinate to the target coordinate $T_G$. A LiDAR stability criterion is triggered for accessing a stable LiDAR elevation value when the scanner reaches the target coordinate.

The present disclosure further logs a stable LiDAR elevation data $E(x)$ and a Vector network analyzer (VNA) data $B(x, t)$ simultaneously, once the LiDAR reaches a stable value and sends the logged stable LiDAR elevation data $E(x)$ and the Vector network analyzer (VNA) data $B(x, t)$ to a data acquisition and computing unit. The stable LiDAR elevation data $E(x)$ is denoised for each of the one or more scan points from the LiDAR by a moving average filter to obtain a denoised LiDAR elevation data $E'(x)$. Furthermore, the denoised LiDAR elevation data $E'(x)$ is transformed to a surface map $H(x)$ by using a polynomial curve fitting to get a smooth surface. The surface map $H(x)$ is oversampled by a predefined number of times to obtain a higher resolution surface $H'(x)$. Furthermore, a velocity model $G(x)$ is created from the oversampled smooth surface $H(x)$, based on the presence of at least one of air or a subsurface media in a B-scan plane. Further a surface normal vector $\Phi(x)$ is created at each of the one or more scan points from the oversampled surface $H'(x)$. A spatial window estimation is performed on the velocity model vector $G(x)$ such that the velocity model vector $G(x)$ is split into a first subsurface media vector $G1'(x)$ and a second subsurface media vector $G2'(x)$ based on a depth of respective subsurface media. Furthermore, an amplitude compensation factor $\Phi'(x)$ is generated for each of the one or more scan points using the created surface normal vector $\Phi(x)$ for mitigating the effects of a non-normal ray incidence on an undulating terrain comprised in the subsurface. Further the amplitude compensation factor $\Phi'(x)$ is multiplied with the VNA data $B(x, t)$ to obtain a space-time domain Radar signal $I(x, t)$. Furthermore, a Fast Fourier Transform (FFT) is performed on the space-time domain Radar signal $I(x, t)$ to obtain a space-frequency domain vector $I'(x, \omega, z = 0)$.

The present disclosure further performs the following steps iteratively for one or more iterative values of incremental depth in $z$-axis for each of the one or more scan points for estimating a phase shift per depth element to form a 2D image of the subsurface media till the total depth of the subsurface investigation is covered. Two phase-shifted vectors $F1(x, \omega, z = 0)$ and $F2(x, \omega, z = 0)$ are obtained based on the subsurface media by multiplying two instances of vector $I'(x, \omega, z = 0)$ by $G1'(x)$ and $G2'(x)$. A Fast Fourier Transform (FFT) is performed on the two phase shifted vectors $F1(x, \omega, z = 0)$ and $F2(x, \omega, z = 0)$ along a $x$-axis to obtain difference between wavenumber and one or more frequency domain vectors $F1'(K_x, \omega, z = 0)$ and $F2'(K_x, \omega, z = 0)$ respectively. One or more phase corrected vectors $J1(K_x, \omega, z + \Delta z)$ and $J2(K_x, \omega, z + $

$\Delta z$) are obtained by phase correcting the difference between the *wavenumber* and the frequency domain vectors $F1'(K_x, \omega, z = 0)$ and $F2'(K_x, \omega, z = 0)$ by a factor of $e^{k1|z|}$ and $e^{k2|z|}$ respectively. Furthermore, a summation of the one or more phase corrected vectors $J(K_x, z)$ is obtained by adding the one or more phase corrected vectors $J1(K_x, \omega, z)$ and $J2(K_x, \omega, z)$ along with a $\omega$ dimension. An Inverse Fast Fourier Transform (IFFT) is performed on the obtained summation of the one or more phase corrected vectors $J(K_x, z)$ is on the *x*-axis to obtain a phase corrected spatial domain vector $O(x, z)$. Finally, a 2D interpolation of the phase corrected spatial domain vector $O(x, z)$ is performed to obtain $O'(x, z)$, wherein $O'(x, z)$ serves as a final B-scan image for the scan area of the subsurface and a test bed.

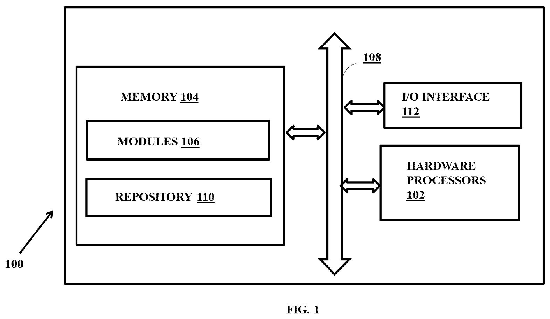

Referring now to the drawings, and more particularly to FIG. 1 through FIG. 10B, where similar reference characters denote corresponding features consistently throughout the figures, there are shown preferred embodiments, and these embodiments are described in the context of the following exemplary system and/or method.

FIG. 1 illustrates an exemplary system for enhanced Radio-Frequency subsurface imaging under complex terrain using Radar and LiDAR, according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

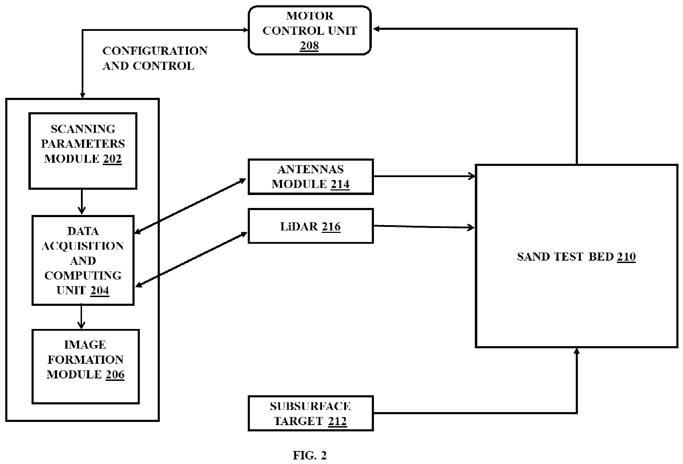

The plurality of modules 106 includes programs or coded instructions that supplement applications or functions performed by the system 100 for enhanced Radio-Frequency subsurface imaging under complex terrain using Radar and LiDAR. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for creating an integrated platform for set-list and loop generation. In an embodiment, the modules 106 include one or more scanning parameters module 202, a data acquisition and computing unit 204, an image formation module 206, a motor control unit 208, a sand test bed 210, a subsurface target 212, an antennas module 214 and a LiDAR 216. The modules are depicted in FIG. 2. These modules that are depicted in FIG. 2 are implemented as at least one of a logically self-contained part of a software program, a self-contained hardware component, and/or a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented external to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

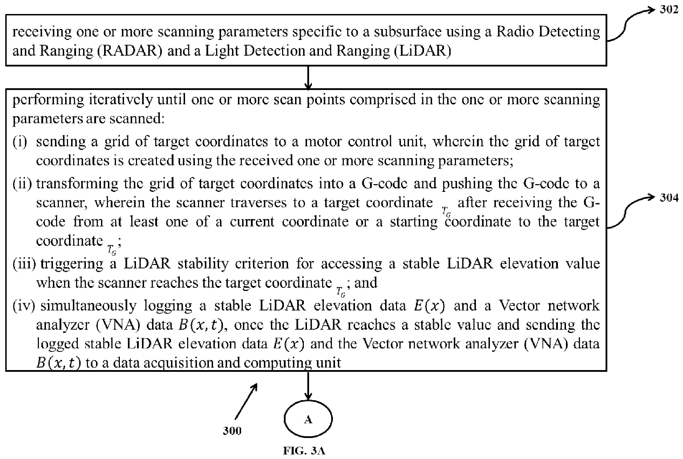

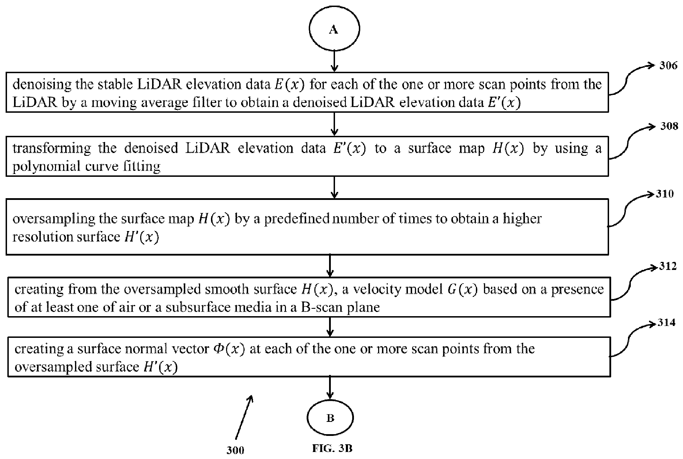

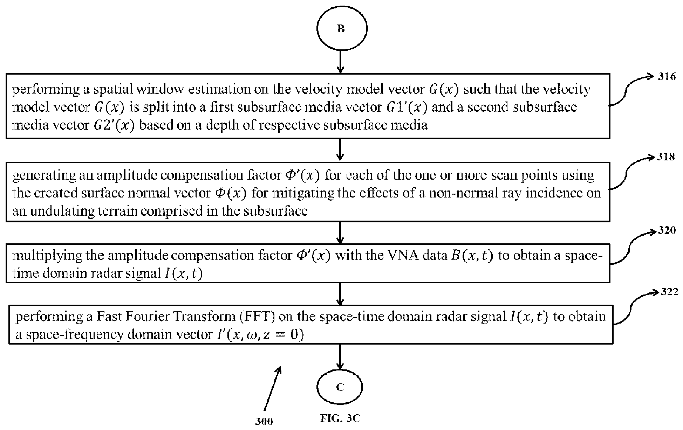

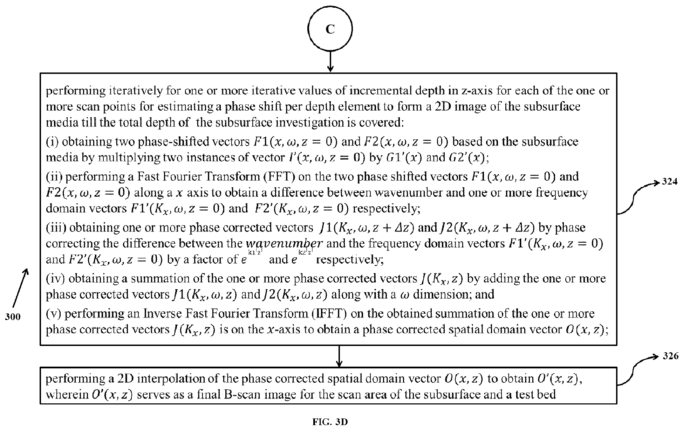

FIGS. 3A through 3D are flow diagrams illustrating a method for enhanced Radio-Frequency subsurface imaging under complex terrain using Radar and LiDAR using the systems 100 of FIGS. 1-2, according to some embodiments of the present disclosure. Steps of the method of FIGS. 3A through 3D shall be described in conjunction with the components of FIG. 2. At step 302 of the method 300, the one or more hardware processors 102 receive one or more scanning parameters specific to a subsurface (represented by the subsurface target 212) using a Radio Detecting and Ranging (RADAR) and a Light Detection and Ranging (LiDAR) (represented by the LiDAR 216). The one or more scanning parameters (represented by the scanning parameters module 202) comprises a scanning step-size $(s_x, s_y)$, a scanning length and a scanning width $(s_l, s_w)$, and a Vector network analyzer (VNA) frequency sweeping range $(f_l, f_h)$. The received one or more scanning parameters are inputted via a Graphical User Interface (GUI) to the data acquisition and computing unit 204.

At step 304 of the method 300, the one or more hardware processors 102 perform the following steps until one or more scan points comprised in the one or more scanning parameters are scanned. A grid of target coordinates is sent to a motor control unit 208. The grid of target coordinates is created using the received one or more scanning parameters. The grid of target coordinates is transformed into a G-code and the G-code is pushed to a scanner. The scanner traverses to a target coordinate $T_G$ after receiving the G-code from at least one of a current coordinate or a starting coordinate to the target coordinate $T_G$. Herein, the starting coordinate refers to the origin of the grid of coordinates, or to a current coordinate if the measurement has already started, then from any current co-ordinate to a next co-ordinate. Herein, the next co-ordinate refers to the target coordinate. A LiDAR stability criterion is triggered for accessing a stable LiDAR elevation value when the scanner reaches the target coordinate $T_G$. Further the stable LiDAR elevation data $E(x)$ and a VNA data $B(x, t)$ are logged simultaneously, once the LiDAR reaches a stable value and the logged stable LiDAR elevation data $E(x)$ and the VNA data $B(x, t)$ are sent to the data acquisition and computing unit. $E(x)$ is the stable LiDAR elevation data that has a plurality of stable LiDAR elevation values collected at one or more grid points.

LiDAR stability criteria - Elevation measurement sensors including LiDAR's often need a certain amount of time to collect stable and accurate data. This, combined with the fact that the setup uses high frequency antennas (represented by the antennas module 214) with a sweep range of up to 6 GHz, makes it imperative that precise elevation data is used for terrain correction. A stability criterion for the same has been formulated. The noise level of the LiDAR has been estimated in stationary mode by considering the standard deviation of LiDAR sensor data i.e., 4 mm in this case. Then, successive LiDAR values at every position are tracked for 10 seconds and if it satisfies the stability criteria, the LiDAR is considered stable and the value obtained is logged as the terrain's surface elevation data.

The noise level of the LiDAR = | 4 | mm. A uniform probability distribution has been considered for the LiDAR noise. Further, for every stability check, an additional noise tolerance of $\pm 1$mm has been considered error, resulting in total of | 5 | mm. Consider, the standard deviation of the noise level to be sigma $\sigma$ and the number of iterations for the LiDAR stability check as $x$.

Consider $P1$ as the probability of elevation data varying beyond $\sigma$ from the stand off distance.
Consider $P2$ as the probability of the LiDAR reading under | 4 | mm from the stand off distance.
Consider $P$ as the conditional probability of event $P2$ if event $P1$ occurs for $x$ successive stability checks.

P can then be written as - $P = (\frac{9-\sigma}{10})^x$

For the present disclosure, the standard deviation comes out to be 2.88 mm for which, the assumption $x = 10$, leads to $P < 0.001$.

At step 306 of the method 300, the one or more hardware processors 102, denoise the stable LiDAR elevation data $E(x)$ for each of the one or more scan points from the LiDAR by a moving average filter to obtain a denoised LiDAR elevation data $E'(x)$.

At step 308 of the method 300, the one or more hardware processors 102 transform the denoised LiDAR elevation data $E'(x)$ to a surface map $H(x)$ by using a polynomial curve fitting to get a smooth surface.

At step 310 of the method 300, the one or more hardware processors 102 oversample the surface map $H(x)$ by a predefined number of times to obtain a higher resolution surface $H'(x)$. Herein the present disclosure, value of the predefined number of times is 10. However, such value of the predefined number of times shall not be construed as limiting the scope of the present disclosure.

At step 312 of the method 300, the one or more hardware processors 102 create a velocity model $G(x)$ from the oversampled smooth surface $H(x)$, based on the presence of at least one of air or a subsurface media in a B-scan plane. The B-scan plane refers to an $x$ - $z$ plane, or to the plane of subsurface investigation along which the Radar scans or takes measurement. In the present disclosure sand is used as the subsurface media.

For sub surface imaging, most phase shift migration algorithms consider the terrain to be planar. This leads to erroneous image formation for surfaces with irregular and non-planar surfaces. To mitigate the image distortion, the precise elevation data obtained from the LiDAR is used for building velocity models by dividing up the subsurface plane into a matrix of pixels and then the system 100 classifies whether each pixel corresponds to media or air. These pixels are then used to obtain the phase shifts caused by the pixel based on the media present as the speed of light gets altered when it passes through different media. The velocity model is then utilized to obtain a spatial window function, i.e., boxcar function for air and media propagation. The inclusion of both the velocity model derived from LiDAR data and the spatial window function into the imaging algorithm treats distinct velocities of air and media separately. In contrast, the conventional PSM considers $v_m$ as constant. This significantly minimizes the problem of subsurface image distortion.

At step 314 of the method 300, the one or more hardware processors 102 create a surface normal vector $\Phi(x)$ at each of the one or more scan points from the oversampled surface $H'(x)$.

At step 316 of the method 300, the one or more hardware processors 102 perform a spatial window estimation on the velocity model vector $G(x)$ such that the velocity model vector $G(x)$ is split into a first subsurface media vector $G1'(x)$ and a second subsurface media vector $G2'(x)$ based on a depth of respective subsurface media.

At step 318 of the method 300, the one or more hardware processors 102 generate an amplitude compensation factor $\Phi'(x)$ for each of the one or more scan points using the created surface normal vector $\Phi(x)$ for mitigating the effects of a non-normal ray incidence on an undulating terrain comprised in the subsurface.

At step 320 of the method 300, the one or more hardware processors 102 multiply the amplitude compensation factor $\Phi'(x)$ with the VNA data $B(x, t)$ to obtain a space-time domain Radar signal $I(x, t)$.

At step 322 of the method 300, the one or more hardware processors 102 perform a Fast Fourier Transform (FFT) on the space-time domain Radar signal $I(x, t)$ to obtain a space-frequency domain vector $I'(x, \omega, z = 0)$.

At step 324 of the method 300, the one or more hardware processors 102 performs the following steps iteratively for one or more iterative values of incremental depth in z-axis for each of the one or more scan points for estimating a phase shift per depth element to form a 2D image of the subsurface media till the total depth of the subsurface investigation is covered. Two phase-shifted vectors $F1(x, \omega, z = 0)$ and $F2(x, \omega, z = 0)$ are obtained based on the subsurface media by multiplying two instances of vector $I'(x, \omega, z = 0)$ by $G1'(x)$ and $G2'(x)$. A Fast Fourier Transform (FFT) is performed on the two phase shifted vectors $F1(x, \omega, z = 0)$ and $F2(x, \omega, z = 0)$ along a x axis to obtain difference between wavenumber and one or more frequency domain vectors $F1'(K_x, \omega, z = 0)$ and $F2'(K_x, \omega, z = 0)$ respectively. One or more phase corrected vectors $J1(K_x, \omega, z + \varDelta z)$ and $J2(K_x, \omega, z + \varDelta z)$ are obtained by phase correcting the difference between the *wavenumber* and the frequency domain vectors $F1'(K_x, \omega, z = 0)$ and $F2'(K_x, \omega, z = 0)$ by a factor of $e^{k1|z|}$ and $e^{k2|z|}$ respectively. The summation of the one or more phase corrected vectors $J(K_x, z)$ is obtained by adding the one or more phase corrected vectors $J1(K_x, \omega, z)$ and $J2(K_x, \omega, z)$ along with a $\omega$ dimension. An Inverse Fast Fourier Transform (IFFT) is performed on the obtained summation of the one or more phase corrected vectors $J(K_x, z)$ is on the x-axis to obtain a phase corrected spatial domain vector $O(x, z)$.

At step 326 of the method 300, the one or more hardware processors 102 perform a 2D interpolation of the phase corrected spatial domain vector $O(x, z)$ to obtain $O'(x, z)$, wherein $O'(x, z)$ serves as a final B-scan image for the scan area of the subsurface and a test bed (represented by the sand test bed 210).

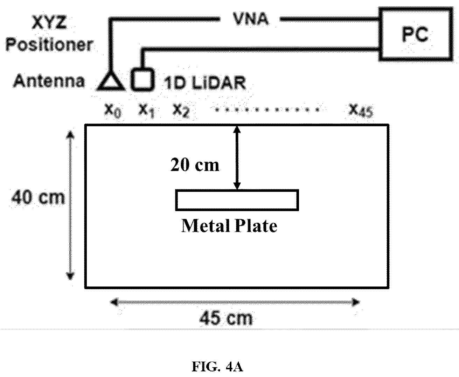

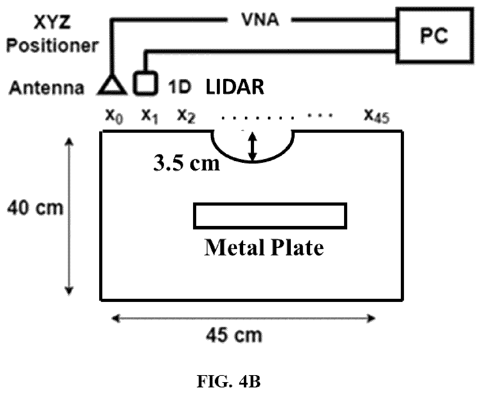

FIGS. 4A and 4B shows a schematic diagram of the experimental setup for (a) planar and (b) non-planar surface test-case, in conjunction with the method for enhanced Radio-Frequency subsurface imaging under complex terrain using Radar and LiDAR, according to some embodiments of the present disclosure.

Experimental Paradigm: To study the effect of a non-planar surface on Radar images, measurements were recorded using a laboratory Radar imaging testbed. The testbed comprises a sand-filled wooden box, an ultra-wideband (operating bandwidth 400-8000 MHz) Vivaldi antenna connected to a vector network analyzer (VNA) (eVNA 63+), a co-located 1D LiDAR sensor and an automated XYZ scanning platform. The sandbox is 90 cm x 90 cm dimension, and 40 cm deep. The antenna has a directional beam-pattern and maximum gain up to 9.6 Decibels relative to isotropic (dBi). The antenna and LiDAR are mounted onto the XYZ scanner using suitable antenna holder and mounts to maintain a standoff distance of 6 cm from the sand surface. An aluminum plate of dimension 15 cm×15 cm and 5 mm thickness has been buried at a depth of 20 cm from the sand surface in a flat orientation. To perform a B-scan, a monostatic mode of operation is used i.e., the VNA measures reflection coefficient for a single antenna through one-port.

At every position, a frequency sweep (400-6000 MHz) is performed by the vector network analyzer (VNA), and the A-trace data is logged using the time-domain utility of the vector network analyzer (VNA) along with the LiDAR data. The antenna is moved above the sand with a constant step-size (1 cm) covering a cross-range of 45 cm along *x*-direction. The measurements are performed here first using a planar sand surface, and then a non-planar section in the middle of the cross-range is introduced thus making the sand surface non-planar. The measurements are recorded in each case, and the data are processed using the conventional and the modified subsurface imaging algorithm.

Conventional Phase Shift Migration: Phase shift migration (PSM) is an inversion algorithm based on the exploding reflector model (ERM) and the scalar wave equation. It estimates the wavefield at a depth of *z* by iteratively backpropagating the scattered field using a phase-shift operator. Let us assume a wavefield $\phi(x, z, t)$ which can be described by the wave eqn. (1).

$$\left(\frac{\partial^2}{\partial x^2} + \frac{\partial^2}{\partial z^2} - \frac{1}{v_m{}^2}\frac{\partial^2}{\partial t^2}\right)\phi\,(x,z,t) = 0 \qquad (1)$$

Taking a 2-D FFT over *x* and *t,* the wavefield expression (known in the art) from depth *z* to *z* + *Δz* is given by eqn. (2).

$$\phi(k_x, z + \Delta z, \omega) = \phi(k_x, z, \omega).\,e^{-j\Delta z\sqrt{\frac{4\omega^2}{v_m^2}-k_x^2}} \qquad (2)$$

where, $k_x$ is the spatial wavenumber along x-axis, $\omega$ is the angular frequency and the exponential part represents the phase shift operator. Following the ERM, the wave velocity is divided by 2. The resulting phase shift operator $\alpha$ is given by eqn. (3).

$$\alpha(k_x, \Delta z, \omega) = e^{-j\Delta z\sqrt{\frac{4\omega^2}{v_m^2}-k_x^2}} \qquad (3)$$

Here, $\sqrt{\frac{4\omega^2}{v_m^2} - k_x^2}$ translates to *kz* as $\omega = \left(\frac{v_m}{2}\right)\sqrt{k_x^2 + k_z^2}$

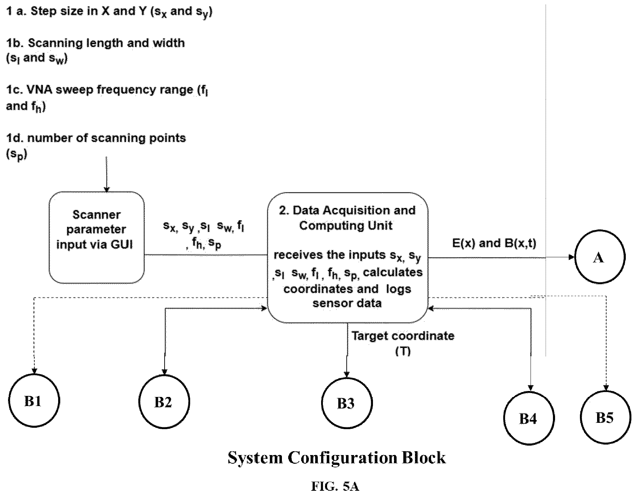

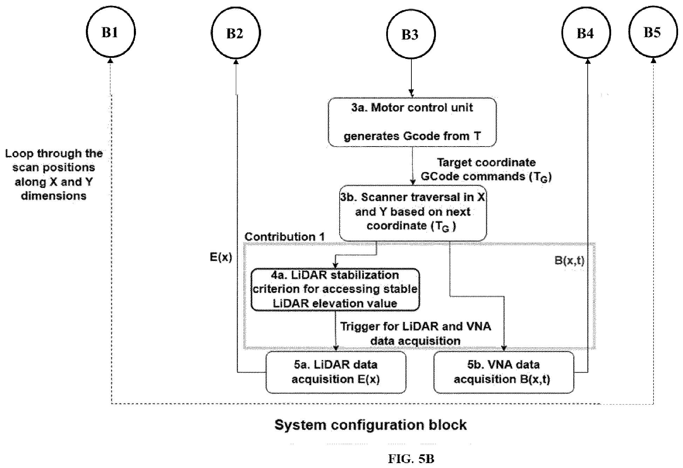

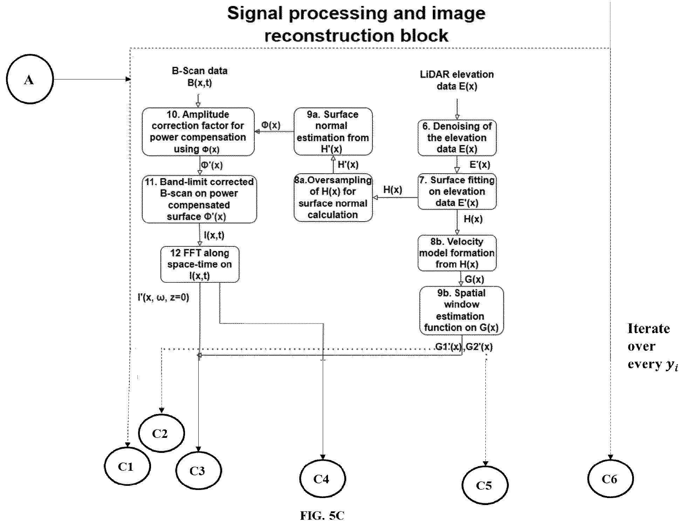

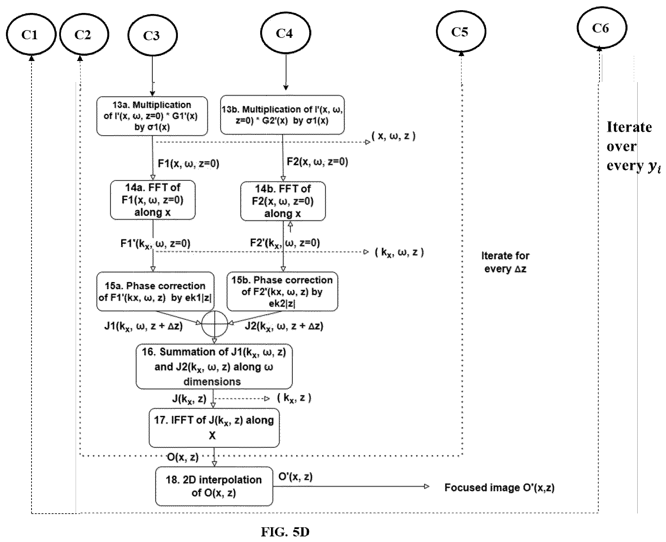

FIGS. 5A through 5D illustrate the block diagram for a modified Phase Shift Migration (PSM) algorithm in conjunction with the method for enhanced Radio-Frequency subsurface imaging under complex terrain using Radar and LiDAR, according to some embodiments of the present disclosure.

Modified PSM: In conventional PSM, the wavefield extrapolation for every *Δz* increment in depth generates an image line considering only the vertical variation of wave velocity. Thus, the phase shift operator in equation (3) considers $v_m$ as constant for a particular step *Δz*, which might hold good for the scenario where the air-media interface is horizontal. However, in the case of non-planar and complex interface (i.e., surface) geometry, the lateral variation of wave velocity also needs to be taken into consideration. The modified PSM algorithm implemented by the system 100 addresses this issue by synergistically integrating LiDAR information into the PSM algorithm. Furthermore, the presence of undulations causes off-normal incidence and reduced backscatter in case of a monostatic Radar. Thus, to compensate for this, an amplitude correction factor has been added to the pre-processing step of the B-scan data.

Estimation of surface topography and velocity model: The LiDAR sensor basically measures the range from the target surface using time of flight concept. Let us consider the data from the LiDAR along the measurement line of B-scan as *E(x)*. Here, the starting scan position is considered as the reference elevation. Using this reference as zero, the surface elevation values for other scan positions are estimated. To eliminate noise in the LiDAR measurements, denoising has been carried out using a moving average filter with a window length of five data points. Since light incident by the LiDAR are not able to penetrate beyond the upper surface, the range information from LiDAR corresponds only to the propagation time in air. Thus, a two-layer velocity model is generated from the LiDAR data to capture the vertical as well as wave velocity variation due to sand and media separately.

Amplitude Compensation based on surface normals estimated from LiDAR data- Non-planar terrains cause the Radar emitted waves to incident the surface with respect to the local normal, which can differ from the global normal. This might result in reduced backscatter for non-planar, undulating surface terrains and affect the intensity and contrast of the reconstructed subsurface image. This issue has been addressed by introducing an amplitude correction factor for the received signal based on the surface normals at the scanning point. The surface normals are calculated from the elevation data obtained from the LiDAR which is used to create a virtual surface model of the test bed. The amplitude of the received signals at the points of measurement is divided by the averaged cosines of the surface normal angles to obtain the amplitude compensated Radar received signal.

Estimation of surface normals and amplitude correction factor: To estimate the surface normals, a polynomial fitting approach is adopted for the LiDAR elevation measurements to best represent the actual testbed surface. The fitted surface *H(x)* is then oversampled to have a denser representation of the surface. The slope of the surface is calculated between two adjacent surface points. From the slope information, the local surface normal angles *Φ(x)* are estimated using the inverse tangent operation. The amplitude correction factor has been formulated as (4) to compensate for the off-normal incidence and resultant reduced backscatter.

$$B_{corr}(x, t) = \frac{B(x,t)}{mov\_avg(|cos\,(\Phi(x)|)} \qquad (4)$$

Modified imaging algorithm: The imaging algorithm implemented by the system 100 incorporates the velocity model, and the amplitude correction factor estimated previously. In contrast to the conventional PSM, where the phase shift operator $\alpha$ considers $v_m$ as constant, the modified operator $\alpha_{vi}$ (5) treats distinct velocities of air and sand separately.

$$\alpha_{vi}(k_x, \Delta z, \omega) = e^{-j\Delta z k_{zi}}, k_{zi} = \sqrt{\frac{4\omega^2}{v_m(x)^2} - k_x^2} \qquad (5)$$

$$v_m(x) = \begin{cases} v_1, \text{ wave velocity in air} \\ v_{2,}, \text{ wave velocity in the media} \end{cases}$$

Additionally, a boxcar spatial window function is defined. $\sigma_i(x)$. Here, $\sigma_1(x)$ is defined to be 1 if the velocity model $v_m(x) = v_1$ and 0 when it is $v_2$. $\sigma_2(x)$ is defined exactly opposite, that is 1 if the velocity model $v_m(x) = v_2$ and 0 when it is $v_m(x) = v_1$. After this modification, the wavefield expression can be represented in (6).

$$\phi(k_x, z + \Delta z, \omega) = IFT[\alpha_{v1}(k_x, \Delta z, \omega) . FT(\sigma_1(x) . \hat{\phi}(x, z, \omega)) +$$
$$\alpha_{v2}(k_x, \Delta z, \omega) . FT(\sigma_2(x) . \hat{\phi}(x, z, \omega))] \qquad (6)$$

where, $\hat{\phi}$ is the Fourier transform of $\phi$ along time dimension, FT and IFT are Fourier and inverse Fourier transform along the spatial dimension. After the formation of image lines for the entire depth range, a 2D cubic interpolation is performed to improve pixel level resolution and the focused subsurface image is generated.

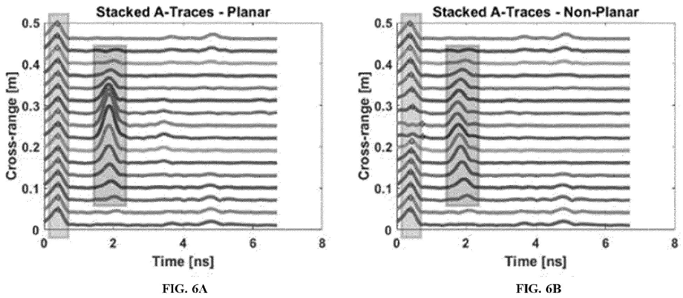

FIGS. 6A and 6B illustrate Radar data collected for (a) planar and (b) non-planar surface, according to some embodiments of the present disclosure.

The B-scan and LiDAR data are collected synchronously here using the subsurface imaging testbed for both the planar and non-planar scenario. The peak amplitude from the sand surface appears as the first peak along the A-trace. In the planar scenario, all the peaks from the surface align, but the same does not hold true for the non-planar case. It can be observed that for the non-planar case, not only do the peaks appear to be shifted, but also the amplitude has reduced drastically in the middle of the cross-range.

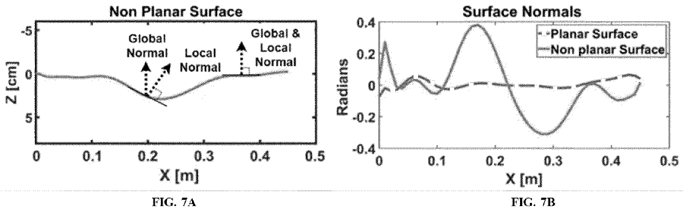

FIGS. 7A and 7B illustrate reconstructed subsurface images using a conventional Phase Shift Migration (PSM) algorithm for (a) planar and (b) non-planar surface, according to some embodiments of the present disclosure.

Imaging Results for Conventional PSM algorithm: The raw-B-scan was initially processed using the conventional PSM algorithm. Reconstructed images (represented by the image formation module 206) in FIGS. 7A and 7B show that PSM reconstructs the subsurface target with closely matching dimension as well as the ground truth standoff distance and depth of the target. Although, in case of the non-planar scenario, the reconstruction is poor. The geometry of the target appears distorted and expanded. The surface in the middle section has reduced amplitude in contrast to planar case. The extreme sections of cross-range that were flat appear to be focused. Also, the surface and target amplitude appear numerically close. This can create misinterpretation with respect to dielectric contrast of the target.

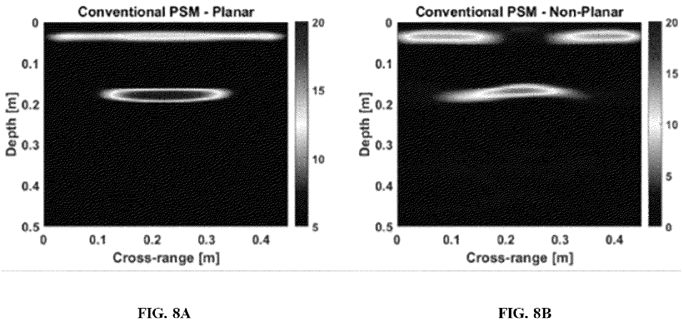

FIGS. 8A and 8B illustrate estimated velocity model for (a) planar, (b) non-planar surface, according to some embodiments of the present disclosure.

Results for Modified PSM algorithm: Estimated elevation and velocity model: The raw LiDAR data was processed to generate the surface elevation and corresponding velocity model for the planar and non-planar case. FIGS. 7A and 7B depict the surface topography in both these cases. The velocity model has been able to capture the vertical and lateral variations of wave velocity.

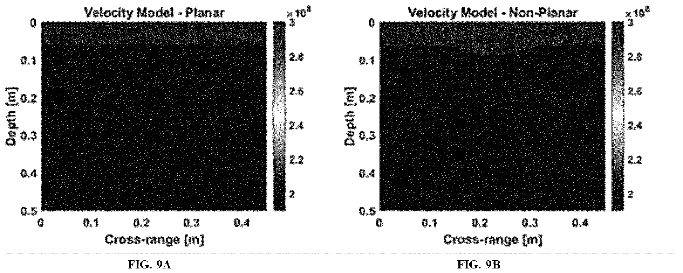

FIGS. 9A and 9B illustrate estimated surface normals for planar and non-planar surface, according to some embodiments of the present disclosure. Estimated surface normal: Using the smooth surface, the estimated normal angles in radians are shown in FIGS. 9A and 9B. It can be observed that the surface normal angle is close to zero radians for the planar surface. However, for the non-planar case, the surface normal angle is first seen as positive, then zero in the middle section and afterwards negative, thus representing the dipping area. Using the equation in (4), the amplitude correction factor is then estimated, and the B-Scan is corrected for both the cases.

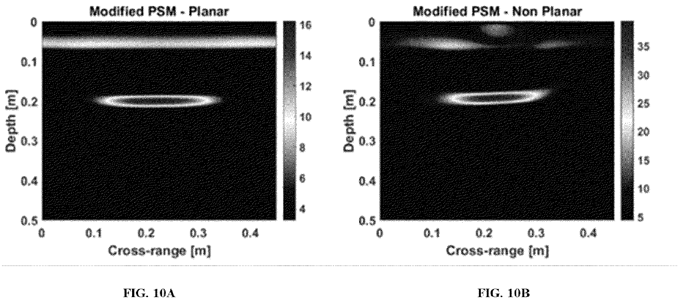

FIGS. 10A and 10B illustrate reconstructed subsurface images using the modified Phase Shift Migration (PSM) algorithm for (a) planar and (b) non-planar surface, according to some embodiments of the present disclosure.

Imaging results for modified PSM algorithm: The corrected B-scan and parameters estimated above using the LiDAR data are processed jointly using the modified PSM algorithm. In FIGS. 10A and 10B, it can be observed that the target's reconstruction has improved significantly in the non-planar case. In comparison to the imaging result obtained from conventional PSM algorithm, the algorithm implemented by the system 100 reconstructs the target's geometry to a fair degree. The dimension and depth information for the surface and subsurface target closely match the ground-truth.

Furthermore, the target's amplitude appears to be corrected and shows better contrast as compared to the surface. The surface geometry also appears to be reconstructed.

The present disclosure provides a system and a method that implements LiDAR in conjunction with a monostatic Radar to compensate for the terrain induced distortions in subsurface Radar images. Experiments were conducted on a laboratory scale using an automated Radar imaging testbed to study the effect of non-planar surface on the subsurface reconstructed Radar images of a buried reference target. The effects of non-planar surface on the retrieved image are studied by recording measurements both for planar as well as non-planar surface conditions. The images were initially reconstructed using the conventional Phase Shift Migration (PSM) algorithm. To mitigate the distortions in the images due to undulation in the complex terrain, a modified PSM algorithm has been implemented by the system 100 that takes both Radar and LiDAR data as input and compensates both the phase and amplitude errors in the images. The key contributions of the system and method of the present disclosure include: (a) estimating a two-layer (air and half-space) velocity model from LiDAR elevation data and modification of the phase shift operator of the PSM algorithm by incorporating this model, and (b) extracting surface normal information from LiDAR data and using the same to formulate an amplitude correction factor.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

The presence of non-planar or undulating terrain can produce defocusing effects in reconstructed Radar images. It can severely distort the reflection amplitudes of subsurface targets, and may produce erroneous dimension, orientation as and localization information in the reconstructed Radar images. The embodiment thus provides a modified PSM algorithm utilizing LiDAR data jointly with the Radar B-Scan to facilitate accurate subsurface imaging under non-planar terrain. The images reconstructed using the modified PSM were able to retain the geometric information, the amplitude contrast between the target and the surface as well as subsurface localization. The method is implemented by the system 100 to investigate the effect of complex surface geometry on the Radar images, and it has been shown that any terrain induced distortions can be mitigated by synergistic use of Radar and LiDAR. The efficacy of the method of the present disclosure can be tested on even more complex terrain geometries to further ascertain the practical usage of the approach. Furthermore, the method of the present disclosure may be improved by considering the heterogeneous permittivity distribution and layered media in the half-space.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein.

**Claims**

1. A processor implemented method, comprising:

   receiving (302), via one or more hardware processors, one or more scanning parameters specific to a subsurface using a Radio Detecting and Ranging (RADAR) and a Light Detection and Ranging (LiDAR);
   performing iteratively (304), via the one or more hardware processors, until one or more scan points comprised in the one or more scanning parameters are scanned:

   (i) sending a grid of target coordinates to a motor control unit, wherein the grid of target coordinates is created using the received one or more scanning parameters;
   (ii) transforming the grid of target coordinates into a G-code and pushing the G-code to a scanner, wherein the scanner traverses to a target coordinate $T_G$ after receiving the G-code from at least one of a current coordinate or a starting coordinate to the target coordinate $T_G$;
   (iii) triggering a LiDAR stability criterion for accessing a stable LiDAR elevation value when the scanner reaches the target coordinate $T_G$; and
   (iv) simultaneously logging a stable LiDAR elevation data $E(x)$ and a Vector network analyzer (VNA) data $B(x, t)$, once the LiDAR reaches a stable value and sending the logged stable LiDAR elevation data $E(x)$ and the Vector network analyzer (VNA) data $B(x, t)$ to a data acquisition and computing unit;

   denoising (306), via the one or more hardware processors, the stable LiDAR elevation data $E(x)$ for each of the one or more scan points from the LiDAR by a moving average filter to obtain a denoised LiDAR elevation data $E'(x)$;
   transforming (308), via the one or more hardware processors, the denoised LiDAR elevation data $E'(x)$ to a surface map $H(x)$ by using a polynomial curve fitting;
   oversampling (310), via the one or more hardware processors, the surface map $H(x)$ by a predefined number of times to obtain a higher resolution surface $H'(x)$;
   creating (312), via the one or more hardware processors, from the oversampled smooth surface $H(x)$, a velocity model $G(x)$ based on a presence of at least one of air or a subsurface media in a B-scan plane;
   creating (314), via the one or more hardware processors, a surface normal vector $\Phi(x)$ at each of the one or more scan points from the oversampled surface $H'(x)$;
   performing (316), via the one or more hardware processors, a spatial window estimation on the velocity model vector $G(x)$ such that the velocity model vector $G(x)$ is split into a first subsurface media vector $G1'(x)$ and a second subsurface media vector $G2'(x)$ based on a depth of respective subsurface media;
   generating (318), via the one or more hardware processors, an amplitude compensation factor $\Phi'(x)$ for each of the one or more scan points using the created surface normal vector $\Phi(x)$ for mitigating the effects of a non-normal ray incidence on an undulating terrain comprised in the subsurface;
   multiplying (320), via the one or more hardware processors, the amplitude compensation factor $\Phi'(x)$ with the VNA data $B(x, t)$ to obtain a space-time domain Radar signal $I(x, t)$;
   performing (322), via the one or more hardware processors, a Fast Fourier Transform (FFT) on the space-time domain Radar signal $I(x, t)$ to obtain a space-frequency domain vector $I'(x, \omega, z = 0)$;
   performing iteratively (324), via the one or more hardware processors, for one or more iterative values of incremental depth in $z$-axis for each of the one or more scan points for estimating a phase shift per depth element to form a 2D image of the subsurface media till the total depth of the subsurface investigation is covered:

   (i) obtaining two phase-shifted vectors $F1(x, \omega, z = 0)$ and $F2(x, \omega, z = 0)$ based on the subsurface media by multiplying two instances of vector $I'(x, \omega, z = 0)$ by $G1'(x)$ and $G2'(x)$;

(ii) performing a Fast Fourier Transform (FFT) on the two phase shifted vectors $F1(x, \omega, z = 0)$ and $F2(x, \omega, z = 0)$ along a $x$ axis to obtain a difference between wavenumber and one or more frequency domain vectors $F1'(K_x, \omega, z = 0)$ and $F2'(K_x, \omega, z = 0)$ respectively;

(iii) obtaining one or more phase corrected vectors $J1(K_x, \omega, z + \Delta z)$ and $J2(K_x, \omega, z + \Delta z)$ by phase correcting the difference between the wavenumber and the frequency domain vectors $F1'(K_x, \omega, z = 0)$ and $F2'(K_x, \omega, z = 0)$ by a factor of $e^{k1|z|}$ and $e^{k2|z|}$ respectively;

(iv) obtaining a summation of the one or more phase corrected vectors $J(K_x, z)$ by adding the one or more phase corrected vectors $J1(K_x, \omega, z)$ and $J2(K_x, \omega, z)$ along with a $\omega$ dimension; and

(v) performing an Inverse Fast Fourier Transform (IFFT) on the obtained summation of the one or more phase corrected vectors $J(K_x, z)$ is on the $x$-axis to obtain a phase corrected spatial domain vector $O(x, z)$; and

performing (326), via the one or more hardware processors, a 2D interpolation of the phase corrected spatial domain vector $O(x, z)$ to obtain $O'(x, z)$, wherein $O'(x, z)$ serves as a final B-scan image for the scan area of the subsurface and a test bed.

2. The processor implemented method as claimed in claim 1, wherein the one or more scanning parameters comprises a scanning step-size $(s_x, s_y)$, a scanning length and a scanning width $(s_l, s_w)$, and a Vector network analyzer (VNA) frequency sweeping range $(f_l, f_h)$.

3. The processor implemented method as claimed in claim 1, wherein the received one or more scanning parameters are inputted via a Graphical User Interface (GUI) to the data acquisition and computing unit.

4. The processor implemented method as claimed in claim 1, wherein the starting coordinate refers to an origin point of the grid of coordinates.

5. A system (100), comprising:

a memory (104) storing instructions;
one or more communication interfaces (112); and
one or more hardware processors (102) coupled to the memory (104) via the one or more communication interfaces (112), wherein the one or more hardware processors (102) are configured by the instructions to:

receive one or more scanning parameters specific to a subsurface using a Radio Detecting and Ranging (RADAR) and a Light Detection and Ranging (LiDAR);
perform iteratively until one or more scan points comprised in the one or more scanning parameters are scanned:

(i) sending a grid of target coordinates to a motor control unit, wherein the grid of target coordinates is created using the received one or more scanning parameters;
(ii) transforming the grid of target coordinates into a G-code and pushing the G-code to a scanner, wherein the scanner traverses to a target coordinate $T_G$ after receiving the G-code from at least one of a current coordinate or a starting coordinate to the target coordinate $T_G$;
(iii) triggering a LiDAR stability criterion for accessing a stable LiDAR elevation value when the scanner reaches the target coordinate $T_G$; and
(iv) simultaneously logging a stable LiDAR elevation data $E(x)$ and a Vector network analyzer (VNA) data $B(x, t)$, once the LiDAR reaches a stable value and sending the logged stable LiDAR elevation data $E(x)$ and the Vector network analyzer (VNA) data $B(x, t)$ to a data acquisition and computing unit;

denoise the stable LiDAR elevation data $E(x)$ for each of the one or more scan points from the LiDAR by a moving average filter to obtain a denoised LiDAR elevation data $E'(x)$;
transform the denoised LiDAR elevation data $E'(x)$ to a surface map $H(x)$ by using a polynomial curve fitting;
oversample the surface map $H(x)$ by a predefined number of times to obtain a higher resolution surface $H'(x)$;
create from the oversampled smooth surface $H(x)$, a velocity model $G(x)$ based on a presence of at least one of air or a subsurface media in a B-scan plane;
create a surface normal vector $\Phi(x)$ at each of the one or more scan points from the oversampled surface $H'(x)$;
perform a spatial window estimation on the velocity model vector $G(x)$ such that the velocity model vector $G(x)$

is split into a first subsurface media vector $G1'(x)$ and a second subsurface media vector $G2'(x)$ based on a depth of respective subsurface media;

generate an amplitude compensation factor $\Phi'(x)$ for each of the one or more scan points using the created surface normal vector $\Phi(x)$ for mitigating the effects of a non-normal ray incidence on an undulating terrain comprised in the subsurface;

multiply the amplitude compensation factor $\Phi'(x)$ with the VNA data $B(x, t)$ to obtain a space-time domain Radar signal $I(x, t)$;

perform a Fast Fourier Transform (FFT) on the space-time domain Radar signal $I(x, t)$ to obtain a space-frequency domain vector $I'(x, \omega, z = 0)$;

perform iteratively, for one or more iterative values of incremental depth in $z$-axis for each of the one or more scan points for estimating a phase shift per depth element to form a 2D image of the subsurface media till the total depth of the subsurface investigation is covered:

> (i) obtaining two phase-shifted vectors $F1(x, \omega, z = 0)$ and $F2(x, \omega, z = 0)$ based on the subsurface media by multiplying two instances of vector $I'(x, \omega, z = 0)$ by $G1'(x)$ and $G2'(x)$;
> (ii) performing a Fast Fourier Transform (FFT) on the two phase shifted vectors $F1(x, \omega, z = 0)$ and $F2(x, \omega, z = 0)$ along a x-axis to obtain difference between wavenumber and one or more frequency domain vectors $F1'(K_x, \omega, z = 0)$ and $F2'(K_x, \omega, z = 0)$ respectively;
> (iii) obtaining one or more phase corrected vectors $J1(K_x, \omega, z + \Delta z)$ and $J2(K_x, \omega, z + \Delta z)$ by phase correcting the difference between the *wavenumber* and the frequency domain vectors $F1'(K_x, \omega, z = 0)$ and $F2'(K_x, \omega, z = 0)$ by a factor of $e^{k1|z|}$ and $e^{k2|z|}$ respectively;
> (iv) obtaining a summation of the one or more phase corrected vectors $J(K_x, z)$ by adding the one or more phase corrected vectors $J1(K_x, \omega, z)$ and $J2(K_x, \omega, z)$ along with a $\omega$ dimension; and
> (v) performing an Inverse Fast Fourier Transform (IFFT) on the obtained summation of the one or more phase corrected vectors $J(K_x, z)$ is on the x-axis to obtain a phase corrected spatial domain vector $O(x, z)$; and

> perform a 2D interpolation of the phase corrected spatial domain vector $O(x, z)$ to obtain $O'(x, z)$, wherein $O'(x, z)$ serves as a final B-scan image for the scan area of the subsurface and a test bed.

6. The system as claimed in claim 5, wherein the one or more scanning parameters comprises a scanning step-size $(s_x, s_y)$, a scanning length and a scanning width $(s_l, s_w)$, and a Vector network analyzer (VNA) frequency sweeping range $(f_l, f_h)$.

7. The system as claimed in claim 5, wherein the received one or more scanning parameters are inputted via a Graphical User Interface (GUI) to the data acquisition and computing unit.

8. The system as claimed in claim 5, wherein the starting coordinate refers to an origin point of the grid of coordinates.

9. One or more non-transitory machine-readable information storage mediums comprising one or more instructions which when executed by one or more hardware processors cause:

receiving, one or more scanning parameters specific to a subsurface using a Radio Detecting and Ranging (RADAR) and a Light Detection and Ranging (LiDAR);

performing iteratively, until one or more scan points comprised in the one or more scanning parameters are scanned:

> (i) sending a grid of target coordinates to a motor control unit, wherein the grid of target coordinates is created using the received one or more scanning parameters;
> (ii) transforming the grid of target coordinates into a G-code and pushing the G-code to a scanner, wherein the scanner traverses to a target coordinate $T_G$ after receiving the G-code from at least one of a current coordinate or a starting coordinate to the target coordinate $T_G$;
> (iii) triggering a LiDAR stability criterion for accessing a stable LiDAR elevation value when the scanner reaches the target coordinate $T_G$; and
> (iv) simultaneously logging a stable LiDAR elevation data $E(x)$ and a Vector network analyzer (VNA) data $B(x, t)$, once the LiDAR reaches a stable value and sending the logged stable LiDAR elevation data $E(x)$ and the Vector network analyzer (VNA) data $B(x, t)$ to a data acquisition and computing unit;

denoising, the stable LiDAR elevation data $E(x)$ for each of the one or more scan points from the LiDAR by a moving average filter to obtain a denoised LiDAR elevation data $E'(x)$;

transforming, the denoised LiDAR elevation data $E'(x)$ to a surface map $H(x)$ by using a polynomial curve fitting;

oversampling, the surface map $H(x)$ by a predefined number of times to obtain a higher resolution surface $H'(x)$;

creating, from the oversampled smooth surface $H(x)$, a velocity model $G(x)$ based on a presence of at least one of air or a subsurface media in a B-scan plane;

creating, a surface normal vector $\Phi(x)$ at each of the one or more scan points from the oversampled surface $H'(x)$;

performing, a spatial window estimation on the velocity model vector $G(x)$ such that the velocity model vector $G(x)$ is split into a first subsurface media vector $G1'(x)$ and a second subsurface media vector $G2'(x)$ based on a depth of respective subsurface media;

generating, an amplitude compensation factor $\Phi'(x)$ for each of the one or more scan points using the created surface normal vector $\Phi(x)$ for mitigating the effects of a non-normal ray incidence on an undulating terrain comprised in the subsurface;

multiplying, the amplitude compensation factor $\Phi'(x)$ with the VNA data $B(x, t)$ to obtain a space-time domain Radar signal $I(x, t)$;

performing, a Fast Fourier Transform (FFT) on the space-time domain Radar signal $I(x, t)$ to obtain a space-frequency domain vector $I'(x, \omega, z = 0)$;

performing iteratively, for one or more iterative values of incremental depth in $z$-axis for each of the one or more scan points for estimating a phase shift per depth element to form a 2D image of the subsurface media till the total depth of the subsurface investigation is covered:

(i) obtaining two phase-shifted vectors $F1(x, \omega, z = 0)$ and $F2(x, \omega, z = 0)$ based on the subsurface media by multiplying two instances of vector $I'(x, \omega, z = 0)$ by $G1'(x)$ and $G2'(x)$;

(ii) performing a Fast Fourier Transform (FFT) on the two phase shifted vectors $F1(x, \omega, z = 0)$ and $F2(x, \omega, z = 0)$ along a $x$ axis to obtain a difference between wavenumber and one or more frequency domain vectors $F1'(K_x, \omega, z = 0)$ and $F2'(K_x, \omega, z = 0)$ respectively;

(iii) obtaining one or more phase corrected vectors $J1(K_x, \omega, z + \Delta z)$ and $J2(K_x, \omega, z + \Delta z)$ by phase correcting the difference between the wavenumber and the frequency domain vectors $F1'(K_x, \omega, z = 0)$ and $F2'(K_x, \omega, z = 0)$ by a factor of $e^{k1|z|}$ and $e^{k2|z|}$ respectively;

(iv) obtaining a summation of the one or more phase corrected vectors $J(K_x, z)$ by adding the one or more phase corrected vectors $J1(K_x, \omega, z)$ and $J2(K_x, \omega, z)$ along with a $\omega$ dimension; and

(v) performing an Inverse Fast Fourier Transform (IFFT) on the obtained summation of the one or more phase corrected vectors $J(K_x, z)$ is on the $x$-axis to obtain a phase corrected spatial domain vector $O(x, z)$; and

performing, a 2D interpolation of the phase corrected spatial domain vector $O(x, z)$ to obtain $O'(x, z)$, wherein $O'(x, z)$ serves as a final B-scan image for the scan area of the subsurface and a test bed.

10. The one or more non-transitory machine-readable information storage mediums as claimed in claim 9, wherein the one or more scanning parameters comprises a scanning step-size $(s_x, s_y)$, a scanning length and a scanning width $(s_l, s_w)$, and a Vector network analyzer (VNA) frequency sweeping range $(f_l, f_h)$.

11. The one or more non-transitory machine-readable information storage mediums as claimed in claim 9, wherein the received one or more scanning parameters are inputted via a Graphical User Interface (GUI) to the data acquisition and computing unit.

12. The one or more non-transitory machine-readable information storage mediums as claimed in claim 9, wherein the starting coordinate refers to an origin point of the grid of coordinates.

FIG. 1

FIG. 2

receiving one or more scanning parameters specific to a subsurface using a Radio Detecting and Ranging (RADAR) and a Light Detection and Ranging (LiDAR) → 302

performing iteratively until one or more scan points comprised in the one or more scanning parameters are scanned:

(i) sending a grid of target coordinates to a motor control unit, wherein the grid of target coordinates is created using the received one or more scanning parameters;

(ii) transforming the grid of target coordinates into a G-code and pushing the G-code to a scanner, wherein the scanner traverses to a target coordinate $_{T_G}$ after receiving the G-code from at least one of a current coordinate or a starting coordinate to the target coordinate $_{T_G}$;

(iii) triggering a LiDAR stability criterion for accessing a stable LiDAR elevation value when the scanner reaches the target coordinate $_{T_G}$; and

(iv) simultaneously logging a stable LiDAR elevation data $E(x)$ and a Vector network analyzer (VNA) data $B(x, t)$, once the LiDAR reaches a stable value and sending the logged stable LiDAR elevation data $E(x)$ and the Vector network analyzer (VNA) data $B(x, t)$ to a data acquisition and computing unit

→ 304

300

A

FIG. 3A

denoising the stable LiDAR elevation data $E(x)$ for each of the one or more scan points from the LiDAR by a moving average filter to obtain a denoised LiDAR elevation data $E'(x)$ → 306

transforming the denoised LiDAR elevation data $E'(x)$ to a surface map $H(x)$ by using a polynomial curve fitting → 308

oversampling the surface map $H(x)$ by a predefined number of times to obtain a higher resolution surface $H'(x)$ → 310

creating from the oversampled smooth surface $H(x)$, a velocity model $G(x)$ based on a presence of at least one of air or a subsurface media in a B-scan plane → 312

creating a surface normal vector $\Phi(x)$ at each of the one or more scan points from the oversampled surface $H'(x)$ → 314

300

FIG. 3B

B

performing a spatial window estimation on the velocity model vector $G(x)$ such that the velocity model vector $G(x)$ is split into a first subsurface media vector $G1'(x)$ and a second subsurface media vector $G2'(x)$ based on a depth of respective subsurface media

316

generating an amplitude compensation factor $\Phi'(x)$ for each of the one or more scan points using the created surface normal vector $\Phi(x)$ for mitigating the effects of a non-normal ray incidence on an undulating terrain comprised in the subsurface

318

multiplying the amplitude compensation factor $\Phi'(x)$ with the VNA data $B(x, t)$ to obtain a space-time domain radar signal $I(x, t)$

320

performing a Fast Fourier Transform (FFT) on the space-time domain radar signal $I(x, t)$ to obtain a space-frequency domain vector $I'(x, \omega, z = 0)$

322

C

300    FIG. 3C

C

performing iteratively for one or more iterative values of incremental depth in z-axis for each of the one or more scan points for estimating a phase shift per depth element to form a 2D image of the subsurface media till the total depth of the subsurface investigation is covered:

(i) obtaining two phase-shifted vectors $F1(x, \omega, z = 0)$ and $F2(x, \omega, z = 0)$ based on the subsurface media by multiplying two instances of vector $I'(x, \omega, z = 0)$ by $G1'(x)$ and $G2'(x)$;

(ii) performing a Fast Fourier Transform (FFT) on the two phase shifted vectors $F1(x, \omega, z = 0)$ and $F2(x, \omega, z = 0)$ along a $x$ axis to obtain a difference between wavenumber and one or more frequency domain vectors $F1'(K_x, \omega, z = 0)$ and $F2'(K_x, \omega, z = 0)$ respectively;

324

(iii) obtaining one or more phase corrected vectors $J1(K_x, \omega, z + \Delta z)$ and $J2(K_x, \omega, z + \Delta z)$ by phase correcting the difference between the wavenumber and the frequency domain vectors $F1'(K_x, \omega, z = 0)$ and $F2'(K_x, \omega, z = 0)$ by a factor of $e^{k_1'z'}$ and $e^{k_2'z'}$ respectively;

(iv) obtaining a summation of the one or more phase corrected vectors $J(K_x, z)$ by adding the one or more phase corrected vectors $J1(K_x, \omega, z)$ and $J2(K_x, \omega, z)$ along with a $\omega$ dimension; and

(v) performing an Inverse Fast Fourier Transform (IFFT) on the obtained summation of the one or more phase corrected vectors $J(K_x, z)$ is on the $x$-axis to obtain a phase corrected spatial domain vector $O(x, z)$;

300

326

performing a 2D interpolation of the phase corrected spatial domain vector $O(x, z)$ to obtain $O'(x, z)$, wherein $O'(x, z)$ serves as a final B-scan image for the scan area of the subsurface and a test bed

FIG. 3D

FIG. 4A

**FIG. 4B**

1 a. Step size in X and Y ($s_x$ and $s_y$)

1b. Scanning length and width
($s_l$ and $s_w$)

1c. VNA sweep frequency range ($f_l$
and $f_h$)

1d. number of scanning points
($s_p$)

**System Configuration Block**

FIG. 5A

**System configuration block**

FIG. 5B

# Signal processing and image reconstruction block

B-Scan data
B(x,t)

LiDAR elevation
data E(x)

10. Amplitude correction factor for power compensation using Φ(x)

Φ(x)

9a. Surface normal estimation from H'(x)

6. Denoising of the elevation data E(x)

Φ'(x)

H'(x)

E'(x)

11. Band-limit corrected B-scan on power compensated surface Φ'(x)

8a.Oversampling of H(x) for surface normal calculation

H(x)

7. Surface fitting on elevation data E'(x)

I(x,t)

H(x)

12 FFT along space-time on I(x,t)

8b. Velocity model formation from H(x)

I'(x, ω, z=0)

G(x)

9b. Spatial window estimation function on G(x)

G1'(x),G2'(x)

**Iterate over every** $y_i$

C2

C1

C3

C4

C5

C6

**FIG. 5C**

FIG. 5D

FIG. 6A

FIG. 6B

**FIG. 7A**

**FIG. 7B**

FIG. 8A                                    FIG. 8B

FIG. 9A

FIG. 9B

FIG. 10A

FIG. 10B

**EUROPEAN SEARCH REPORT**

Application Number

EP 25 20 2357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOSSI LUCA ET AL: "Design of a robotic platform for landmine detection based on Industry 4.0 paradigm with data sensors integration",<br>2020 IEEE INTERNATIONAL WORKSHOP ON METROLOGY FOR INDUSTRY 4.0 & IOT, IEEE,<br>3 June 2020 (2020-06-03), pages 16-20, XP033790672,<br>DOI:<br>10.1109/METROIND4.0IOT48571.2020.9138227<br>[retrieved on 2020-07-09]<br>* paragraph [0OI.] - paragraph [0IV.]; figures 1,2,4 * | 1-12 | INV.<br>G01S7/40<br>G01S7/48<br>G01S13/86<br>G01S13/88<br>G01S17/42 |
| A | US 2010/052969 A1 (NIKTASH AFSHIN [US])<br>4 March 2010 (2010-03-04)<br>* paragraph [0003] - paragraph [0008]; figures 2a,b * | 1-12 | |
| A | STREICH R ET AL: "VECTOR-MIGRATION OF STANDARD COPOLARIZED 3D GPR DATA",<br>GEOPHYSICS, SOCIETY OF EXPLORATION GEOPHYSICISTS, US,<br>vol. 72, no. 5,<br>1 September 2007 (2007-09-01), pages J65-J75, XP001506278,<br>ISSN: 0016-8033, DOI: 10.1190/1.2766466<br>* page 66 - page 70; figure 2 * | 1-12 | TECHNICAL FIELDS SEARCHED (IPC)<br><br>G01S |

The present search report has been drawn up for all claims

| Place of search | Date of completion of the search | Examiner |
|---|---|---|
| Munich | 12 February 2026 | Kaleve, Abraham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 2357

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | Publication date | Patent family member(s) | Publication date |
|---|---|---|---|
| US 2010052969 A1 | 04-03-2010 | NONE | |

For more details about this annex : see Official Journal of the European Patent Office, No. 12/82

EPO FORM P0459

**REFERENCES CITED IN THE DESCRIPTION**

**Patent documents cited in the description**

- IN 202421096556